# FASCICULE DE BREVET EUROPEEN

(11) **EP 1 283 961 B1**
(45) Date de publication et mention de la délivrance du brevet: **05.11.2003**
(21) Numéro de dépôt: 01938347.0
(22) Date de dépôt: 25.05.2001
(51) Int. Cl.: F16H 25/20, H02K 7/06

(54) **TRANSMISSION A VIS, ECROU ET CABLE ATTACHE A LA VIS**
SCHRAUBGETRIEBE, GEWINDEMUTTER UND AN SCHRAUBE BEFESTIGTES KABEL
SCREW TRANSMISSION, NUT AND CABLE ATTACHED TO SCREW

(30) Priorité: 26.05.2000 FR 0006757
(43) Date de publication de la demande: 19.02.2003
(73) Titulaire: COMMISSARIAT A L'ENERGIE ATOMIQUE, 75752 Paris Cédex 15 (FR)
(72) Inventeur: GARREC, Philippe, F-91190 Gif sur Yvette (FR)
(74) Mandataire: Ilgart, Jean-Christophe
(86) Numéro de dépôt international: FR0101630
(87) Numéro de publication internationale: WO01092761

(56) Documents cités:
- FR-A- 2 782 467
- PATENT ABSTRACTS OF JAPAN vol. 1998, no. 05, 30 avril 1998 (1998-04-30) -& JP 10 014164 A (KATSURAGAWA ELECTRIC CO LTD), 16 janvier 1998 (1998-01-16)
- PATENT ABSTRACTS OF JAPAN vol. 1995, no. 11, 26 décembre 1995 (1995-12-26) & JP 07 231606 A (KATSURAGAWA ELECTRIC CO LTD), 29 août 1995 (1995-08-29)
- PATENT ABSTRACTS OF JAPAN vol. 1999, no. 09, 30 juillet 1999 (1999-07-30) -& JP 11 098760 A (NIPPON CABLE SYST INC), 9 avril 1999 (1999-04-09)

## Description

Le sujet de l'invention est une transmission comprenant une vis, un écrou, et un organe longiligne tel qu'un câble attaché à la vis, et dont on commande le mouvement par l'intermédiaire de la vis, par une conversion de mouvement entre une rotation de l'écrou et une translation de la vis.

Il existe diverses façons d'entraîner des câbles de transmission de mouvement, enroulés en boucle ou non mais dans lesquels il convient presque toujours d'assurer une démultiplication de la vitesse du moteur pour accroître l'effort transmis par le câble. Un système rencontré comprend deux poulies de diamètres différents sur lesquelles le câble est enroulé, en faisant éventuellement plusieurs tours autour de la poulie de plus petit diamètre pour accroître l'adhérence. La petite poulie est menante et communique une rotation plus faible mais un couple plus important à la grande poulie. Un inconvénient de ce système est qu'il est encombrant, les deux poulies ayant des diamètres minimaux importants, que des glissements sont difficiles à supprimer entièrement et que la portion du câble sur la petite poulie est soumise à une vitesse angulaire importante qui augmente sa fatigue et risque donc de l'user vite.

Un autre système comprend des réductions par engrenage, mais ces moyens mécaniques comprennent des jeux importants qui les rendent peu précis, et leur encombrement est encore important. Dans d'autres conceptions, les mouvements du câble sont commandés par l'intermédiaire d'un moufle de démultiplication du mouvement entre un câble d'actionnement et un câble entraîné, mais les moufles constituent des moyens compliqués et la fiabilité de l'ensemble n'est pas assurée.

Une dernière famille de transmissions de mouvement à un câble, à laquelle se rapporte l'invention, comprend des systèmes à vis et écrou dont l'un des éléments est entraîné par le moteur et l'autre est attaché au câble. Ces systèmes procurent une excellente réduction de vitesse et une bonne résistance nominale, mais il apparaît le problème important que les éléments doivent être guidés et qu'il faut tenir compte de défauts d'alignement possibles entre la vis, l'écrou et le câble.

Ce dernier phénomène produit des frottements importants entre la vis et l'écrou et des moments de flexion sur la vis, qui compromettent le rendement et la durée de vie auxquels on aurait pu s'attendre. Les mécanismes chargés de guider la vis et l'écrou en les maintenant alignés, et qui auraient pu remédier à ces défauts sont trop encombrants ou encore augmentent le frottement. C'est ainsi qu'on a proposé (dans le brevet français 2 782 467) de monter l'écrou sur un bâti par l'intermédiaire d'un joint de cardan qui lui permet de suivre les mouvements d'inclinaison de la vis, à laquelle le câble ou un autre organe de liaison est attaché, mais le joint de cardan doit entourer l'écrou de façon que ses axes de rotation convergent vers le centre de l'écrou, ce qui donne un assemblage trop volumineux pour de nombreuses applications. Un autre joint de cardan est d'ailleurs prévu entre la vis et l'organe de liaison auquel elle est attachée.

On recourt donc à un moyen différent pour améliorer l'alignement entre l'organe de transmission tel que le câble, la vis à laquelle cet organe est attaché et l'écrou, ou du moins pour atténuer les effets de défauts d'alignement.

Sous sa forme la plus générale, l'invention concerne ainsi une transmission composée d'un organe longiligne, d'un moteur, et d'un ensemble à vis et écrou, l'écrou faisant coulisser la vis, dont l'écrou est entraîné par le moteur et l'organe est attaché à la vis de manière à commander le mouvement de l'organe par l'intermédiaire de la vis par une conversion de mouvement entre une translation de l'écrou et une rotation de la vis et où un composé de l'organe et d'un moyen d'attache de l'organe à bras est, souple en position angulaire par rapport à la vis ; cette transmission est caractérisée en ce que la vis est creusée d'une cavité axiale et que le moyen d'attache est logé dans la cavité.

Le moyen d'attache est, de préférence, à une position de mi-course de l'écrou sur la vis. Il résulte de cette conception que le moment de flexion exercé sur la vis entre l'écrou et le point d'attache de l'organe de transmission est proportionnel à un bras de levier court : il est donc faible.

La cavité et l'organe longiligne peuvent déboucher de la vis par une extrémité ou par les deux, notamment si l'organe est enroulé en boucle. L'organe peut être un câble entièrement souple, une tige rigide ou encore un jonc flexible. Les moyens d'attache pourront alors être quelque peu différents. Dans le cas d'une pièce flexible, une sertissure dans la vis sera suffisante. Sinon, il faudra concevoir une articulation simple ou double, ou une rotule, pour autoriser une variation de l'angle entre la tige et la vis.

Si l'organe de transmission n'est pas rigide en torsion, il convient normalement de prévoir un moyen d'arrêt en rotation de pivotement de la vis par rapport à un bâti ou à un autre endroit fixe. Il peut s'agir d'un chariot à roulement dirigé en direction de la vis, ou plus généralement d'un joint à double degré de liberté transversale comme un joint d'Oldham, ou tout autre joint ayant la même propriété.

Le moyen d'attache de l'organe longiligne peut être retenu dans la vis par une entretoise engagée dans la cavité, contre laquelle le moyen d'attache bute, et un capuchon évidé monté sur la vis en butant sur l'entretoise, et que l'organe longiligne de transmission traverse.

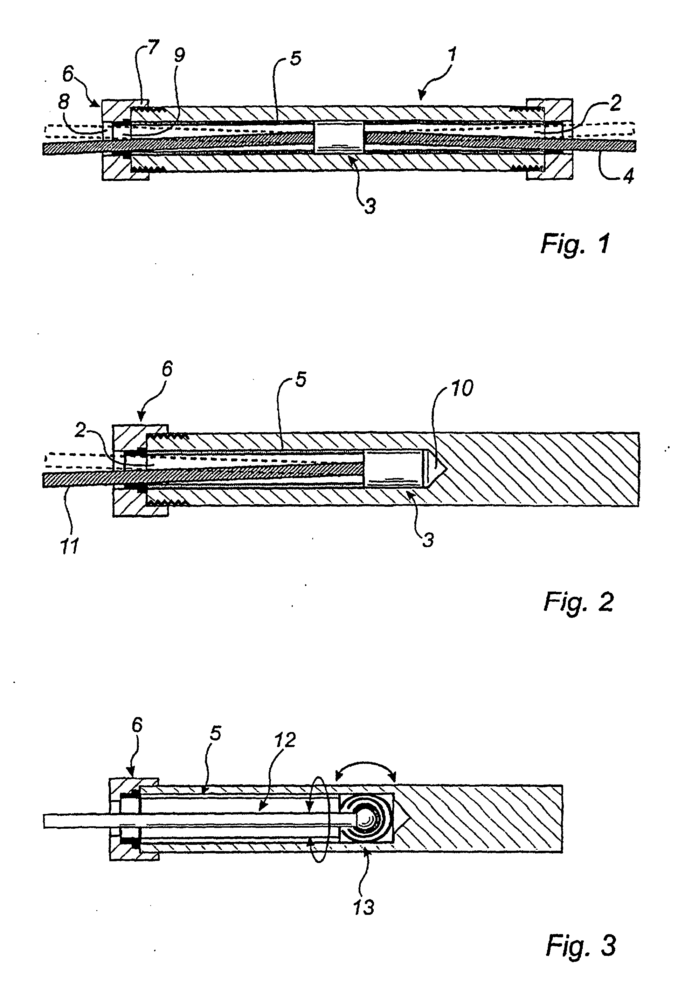

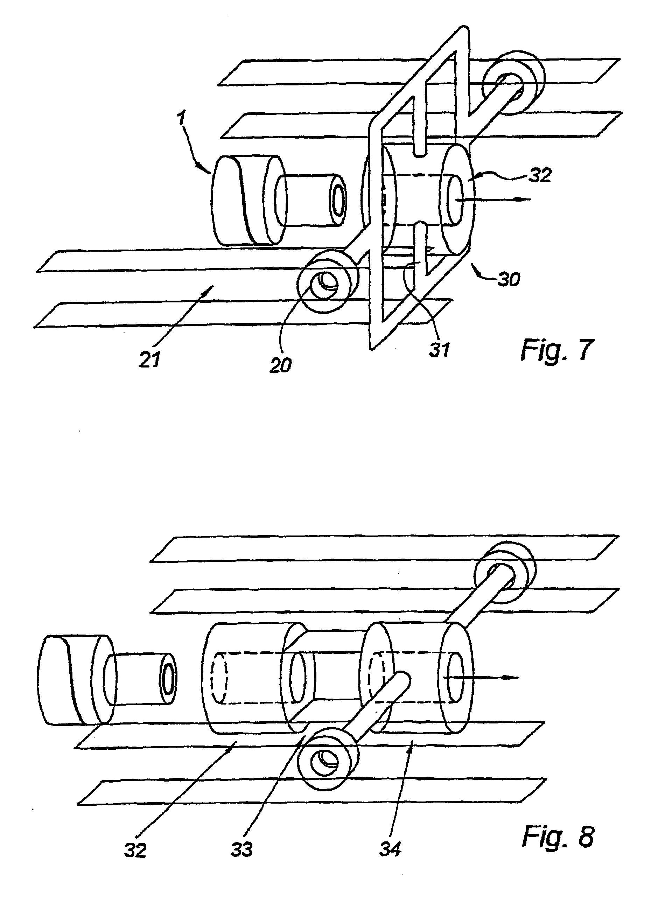

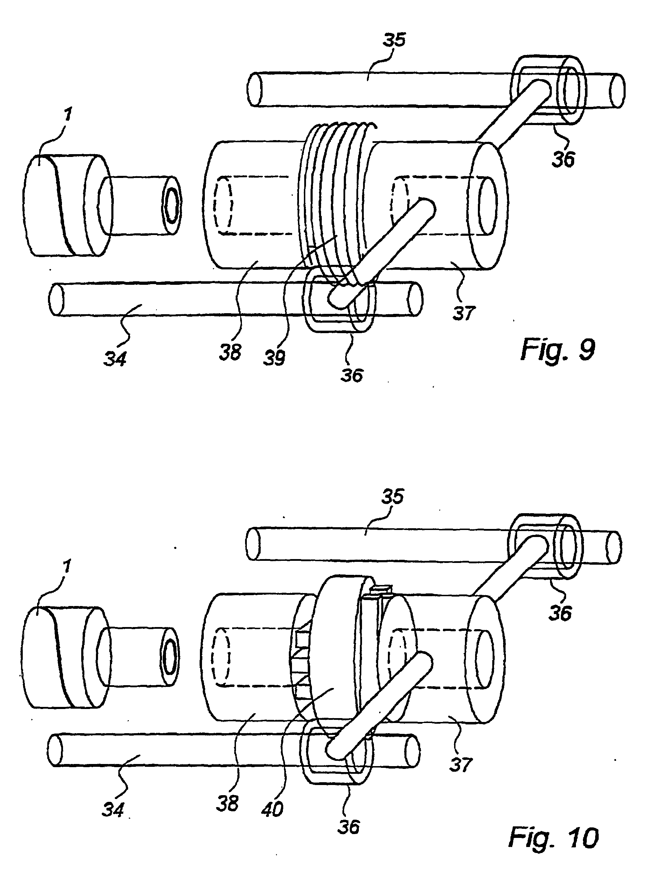

L'invention sera maintenant décrite plus en détail au moyen des figures 1, 2, 3, 4, 5, 6, 7, 8, 9 et 10 qui représentent toutes des modes différents de l'invention.

La figure 1 représente une vis sans fin 1 traversée de part en part par une cavité axiale 2 et au centre de laquelle on trouve une sertissure 3 d'un câble 4 de transmission qui traverse également la cavité 2 de part en part et auquel est fixée une pièce non représentée à mouvoir. Le câble 4 peut former une boucle sans fin, notamment dans cette construction, ou un segment. La sertissure 3 est retenue, de chaque côté de la cavité 2, par une entretoise 5 en forme de douille qui s'étend entre elle et une des ouvertures de la cavité 2, où elle est retenue par un capuchon 6 comprenant une portion en écrou 7 engagée sur les derniers filets de la vis 1, une ouverture centrale 8 de passage du câble 4 et une pièce de butée 9 qui maintient l'entretoise 5 dans la cavité 2.

La figure 2 montre une construction analogue, mais où la cavité 10 est borgne et la sertissure 3 est en appui contre le fond de cette cavité. C'est alors une extrémité d'un câble 11 de longueur finie qui est sertie. On rencontre un seul système à entretoise 5 et capuchon 6.

L'invention peut être mise en oeuvre (figure 3) avec une tige rigide 12 remplaçant un câble flexible. La sertissure 3 est alors remplacée par une articulation, et en particulier par une articulation double ou une rotule 13 dans laquelle une extrémité de la tige 12 est retenue. Les autres aspects des constructions des figures 1 et 2 restent possibles, et on retrouve par ailleurs un système à douille servant d'entretoise 5 et à capuchon 6 servant de butée.

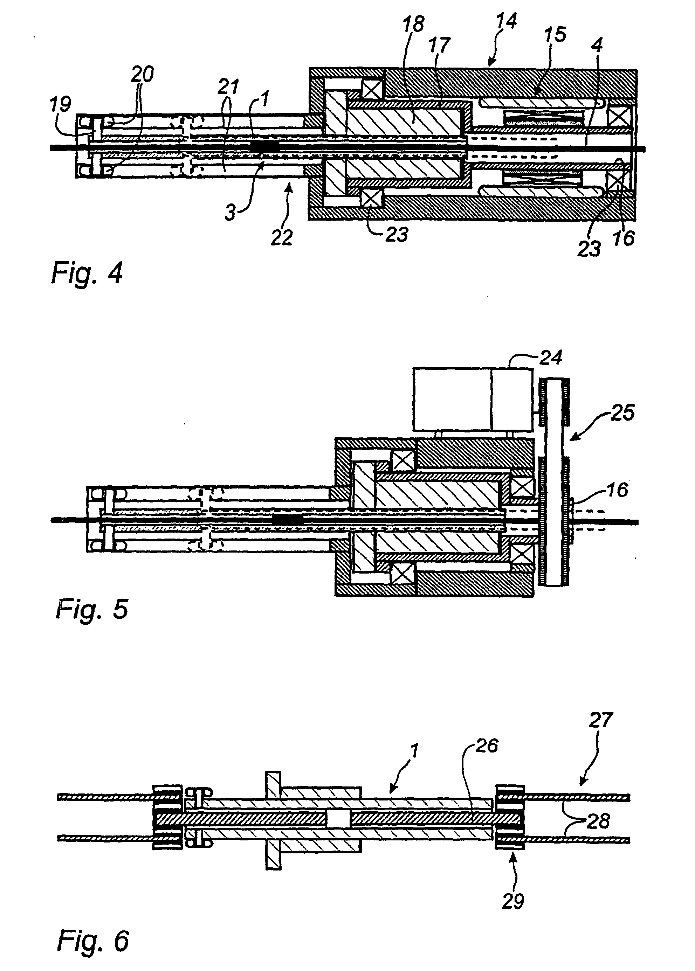

Une transmission complète est représentée à la figure 4. Un bâti 14 loge un moteur creux 15 qui entraîne un moyeu 16 s'élargissant hors du moteur 15 pour former un réceptacle 17 de logement d'un écrou 18 mouvant une vis conforme à l'une quelconque des définitions précédentes, comme la vis 1 de la figure 1. Elle est engagée dans l'écrou 18 et, selon le mouvement qui lui est imposé, peut pénétrer dans le moyeu 16, que traverse de toute façon une branche du câble 4. L'autre extrémité de la vis 1 porte un axe 19 de support de galets 20 roulant dans des rainures 21 largement ouvertes d'un manche 22 appartenant au bâti 14. Ce système à chariot de roulement solidaire de la vis 1 s'oppose aux rotations de la vis 1 et permet donc à l'écrou 18 de la faire coulisser le long des rainures 21 à peu près parallèles à la vis 1, tout en se prêtant à de petits mouvements de basculement transversal de la vis 1 dans le manche 22 fixe en fonction de la traction exercée sur le câble 4, grâce aux largeurs de piste et d'ouverture des rainures 21. Enfin, le moyeu 16 est maintenu dans le bâti 14 par une paire de paliers 23.

La liaison mécanique entre la vis 1 et l'organe qui la guide, ici le manche 22, doit être sensiblement équivalent à un joint d'Oldham, qui a la propriété d'absorber les mouvements dans les deux directions transversales des deux pièces qu'il unit. Dans la réalisation précédente, les galets 20 peuvent se déplacer de côté sans quitter les pistes des rainures 21, et dans l'autre direction en se soulevant des pistes. Il n'est pas nécessaire que les galets 20 soient étroitement guidés dans les rainures 21 puisqu'ils servent surtout à s'opposer à la rotation de la vis 1.

Si les galets 20 sont pourtant disposés dans des rainures 21 trop étroitement ouvertes pour autoriser des débattements suffisants de la vis 1, la souplesse nécessaire peut être restaurée si les galets 20 sont montés sur un cadre 30 muni d'une glissière centrale 31, orientée dans la direction d'ouverture des rainures 21, sur laquelle un embout 32 de la vis 1 coulisse (figure 7), ou si un support à lames 33, souple dans la même direction, unit l'embout 32 à un chariot 34 porteur des galets 20 (figure 8). Un soufflet pourrait remplacer le ressort à lames 33 ; l'assemblage serait alors souple dans la direction de largeur des rainures 21, ce qui permettrait de remplacer celles-ci et d'utiliser un guidage rigoureux, prenant l'aspect de glissières 35 parallèles à la vis 1 et sur laquelle glisseraient des bagues 36 liées à un chariot 37, qui serait aussi lié à un embout 38 de la vis 1 soit par un soufflet 39 (figure 9), soit par un joint d'Oldham 40 (figure 10).

On s'aperçoit que la sertissure 3, située sensiblement à mi-longueur de la vis 1 et donc sensiblement à mi-course, reste à peu de distance de l'écrou 18 même quand la vis 1 est dans sa position extrême : si une flexion verticale lui est imposée par le câble 4, l'effort qui s'exerce entre elle et l'écrou 18 reste modéré, ce qui réduit substantiellement les risques de coincement et de flexion de la vis 1 et des frottements qui s'exerceraient entre elle et l'écrou 18 même sans dommage définitif. Les essais menés en laboratoire ont démontré cela, et en particulier que les frottements mesurés restaient proches des valeurs théoriques du système à vis et écrou. Un effet de l'invention est donc de rendre son efficacité à ce système.

La figure 5 est une conception analogue, dans laquelle le moteur creux 15 est remplacé par un moteur 24 extérieur au bâti 14 et qui entraîne un bout du moyeu 16 par l'intermédiaire d'une transmission 25 par courroie tendue entre des poulies ou autre.

La figure 6 montre un organe de transmission composite comprenant, à l'intérieur de la vis 1, une portion simple 26 en câble unique, laquelle est unie à une portion complémentaire 27 de l'organe qui est divisé là et composé d'une pluralité de brins de câbles 28 unis à la portion simple 26 par un palonnier 29. Cette disposition peut se retrouver des deux côtés de la vis 1 le cas échéant. L'organe peut comme précédemment former une boucle ou non.

Il est manifeste que l'invention peut être mise en oeuvre d'autres façons. C'est ainsi que l'organe d'arrêt en rotation devient inutile quand l'organe de transmission est rigide en torsion, insusceptible de pivoter et relié à la vis par une liaison rigide en torsion : dans ces constructions, l'arrêt en rotation de la vis 18 est produit par les éléments essentiels du mécanisme eux-mêmes ; dans le cas de la figure 3, la barre 12 est rigide en torsion et retient donc la vis si elle est attachée à un corps qui ne tourne pas et si une articulation double remplace la rotule 13.

De nombreuses applications peuvent être proposées pour l'invention. L'organe de transmission peut entraîner un corps en rotation, en translation, voire en pivotement ou en d'autres mouvements. On envisage déjà d'utiliser l'invention pour régler le braquage de roues directrices, ou pour servir de suspension active à une roue suspendue à un levier que l'invention ferait tourner, en complément à un moyen d'amortissement classique.

Quand l'organe de transmission est souple et doit être tendu, cela peut être réalisé par un ressort, un contrepoids ou une disposition en boucle de l'organe.

## Revendications

1. Transmission, composée d'un organe longiligne (4, 11, 12), d'un moteur (15, 24), et d'un ensemble à vis (1) et écrou (18), l'écrou faisant coulisser la vis, dont l'écrou est entraîné par le moteur et l'organe est attaché à la vis de manière à commander le mouvement de l'organe par l'intermédiaire de la vis et par une conversion de mouvement entre une rotation de l'écrou et une translation de la vis, un composé de l'organe et d'un moyen d'attache de l'organe à la vis étant souple en position angulaire par rapport à la vis, **caractérisée en ce que** la vis est creusée d'une cavité axiale (2) et que le moyen d'attache (3, 13) est logé dans la cavité.

2. Transmission selon la revendication 1, **caractérisée en ce que** le moyen d'attache (3, 13) est à une position de mi-course de l'écrou sur la vis.

3. Transmission selon l'une quelconque des revendications 1 ou 2, **caractérisée en ce que** la cavité et l'organe traversent totalement la vis.

4. Transmission selon l'une quelconque des revendications 1 à 3, **caractérisée en ce que** l'organe est un câble souple (4) et le moyen d'attache (3) est une sertissure.

5. Transmission selon l'une quelconque des revendications 1 à 3, **caractérisée en ce que** l'organe est une tige rigide (12) et le moyen d'attache comprend une double articulation.

6. Transmission selon l'une quelconque des revendications 1 à 5, **caractérisée en ce que** l'organe est rigide en torsion et la vis est libre en rotation.

7. Transmission selon l'une quelconque des revendications 1 à 5, **caractérisée en ce que** la vis est pourvue d'un moyen d'arrêt en rotation (19, 20) par rapport à un bâti (14, 22).

8. Transmission selon la revendication 7, **caractérisée en ce que** l'organe d'arrêt en rotation comprend un chariot à roulement dirigé en direction de la vis.

9. Transmission selon l'une quelconque des revendications 7 et 8, **caractérisée en ce que** l'organe d'arrêt en rotation comprend un joint à double liberté de basculement transversal de la vis entre la vis et le bâti.

10. Transmission selon la revendication 8, **caractérisée en ce que** le joint comprend des rainures larges et largement ouvertes (21) dans lesquelles des galets (20) du chariot peuvent se déplacer transversalement à la vis dans deux directions, le chariot (19) étant lié à la vis.

11. Transmission selon la revendication 8, **caractérisé en ce que** le joint comprend des rainures larges dans lesquelles des galets (20) du chariot peuvent se déplacer transversalement à la vis dans une direction, le chariot étant lié à la vis par un moyen (31, 33) assurant une souplesse dans une direction d'ouverture des rainures.

12. Transmission selon la revendication 11, **caractérisée en ce que** le moyen est un ressort à lames (35).

13. Transmission selon la revendication 7, **caractérisée en ce que** le moyen d'arrêt en rotation comprend des glissières (35) sur lesquelles coulisse un chariot (37) uni à la vis par un joint (39, 40) souple dans deux directions transversales à la vis (1).

14. Transmission selon l'un quelconque des revendication 1 à 13, **caractérisée en ce qu'**elle comprend une entretoise (5) engagée dans la cavité (2), contre laquelle le moyen d'attache (3, 13) bute et un capuchon (16) évidé, monté sur la vis (1) en butant sur l'entretoise, et que l'organe longiligne traverse.

15. Transmission selon l'une quelconque des revendications 1 à 14, **caractérisée en ce que** l'organe longiligne comprend une portion unitaire (26) dans la vis (1) et une portion divisée (27) hors de la vis, qui est jointe à la portion unitaire par un palonnier (29).

## Patentansprüche

1. Getriebe, gebildet durch ein langgestrecktes Organ (4, 11, 12), einen Motor (15, 24) und ein System aus Schraube (1) und Mutter (18), bei dem die Mutter die Schraube gleiten lässt, die Schraube angetrieben wird durch den Motor und das Organ an der Schraube befestigt ist, so dass man die Bewegung des Organs durch die Schraube und durch eine Bewegungsumwandlung zwischen einer Rotation der Mutter und einer Translation der Schraube steuern kann, wobei ein Verbindungsteil des Organs mit einer Befestigungseinrichtung des Organs an der Schraube in Bezug auf die Schraube eine flexible bzw. nachgiebige Winkelposition besitzt,
**dadurch gekennzeichnet,**
**dass** die Schraube einen axialen Hohlraum (2) aufweist und die Befestigungseinrichtung (3, 13) in diesem Hohlraum sitzt.

2. Getriebe nach Anspruch 1, **dadurch gekennzeichnet, dass** die Befestigungseinrichtung (3, 13) sich in einer Mittelstellung des Wegs der Mutter auf der Schraube befindet.

3. Getriebe nach einem der Ansprüche 1 oder 2, **dadurch gekennzeichnet, dass** der Hohlraum und das Organ die Schraube ganz durchqueren.

4. Getriebe nach einem der Ansprüche 1 bis 3, **dadurch gekennzeichnet, dass** das Organ ein flexibles Kabel (4) ist und die Befestigungseinrichtung (3) ein Crimpverbindungselement.

5. Getriebe nach einem der Ansprüche 1 bis 3, **dadurch gekennzeichnet, dass** das Organ eine steife Stange (12) ist und die Befestigungseinrichtung ein Doppelgelenk umfasst.

6. Getriebe nach einem der Ansprüche 1 bis 5, **dadurch gekennzeichnet, dass** das Organ torsionssteif ist und die Schraube rotationsfrei.

7. Getriebe nach einem der Ansprüche 1 bis 5, **dadurch gekennzeichnet, dass** die Schraube in Bezug auf ein Gehäuse (14, 22) mit einer Rotationsarretierungseinrichtung (19, 20) ausgerüstet ist.

8. Getriebe nach Anspruch 7, **dadurch gekennzeichnet, dass** die Rotationsarretierungseinrichtung einen in der Richtung der Schraube rollfähigen Wagen umfasst.

9. Getriebe nach einem der Ansprüche 7 und 8, **dadurch gekennzeichnet, dass** die Rotationsarretierungseinrichtung ein Gelenk mit doppelter transversaler Kippfreiheit der Schraube zwischen der Schraube und dem Gehäuse umfasst.

10. Getriebe nach Anspruch 8, **dadurch gekennzeichnet, dass** das Gelenk breite und weit offene Nuten bzw. Rillen (21) umfasst, in denen Rollen (20) des Wagens sich transversal zu der Schraube in zwei Richtungen bewegen bzw. verschieben können, wobei der Wagen (19) mit der Schraube verbunden ist.

11. Getriebe nach Anspruch 8, **dadurch gekennzeichnet, dass** das Gelenk breite Rillen umfasst, in denen Rollen (20) des Wagens sich transversal zu der Schraube in einer Richtung bewegen bzw. verschieben können, wobei der Wagen mit der Schraube durch eine Einrichtung (31, 33) verbunden ist, die eine Flexibilität bzw. Nachgiebigkeit in einer Öffnungsrichtung der Rillen gewährleistet.

12. Getriebe nach Anspruch 11, **dadurch gekennzeichnet, dass** die Einrichtung (31, 33) eine Blattfeder (33) ist.

13. Getriebe nach Anspruch 7, **dadurch gekennzeichnet, dass** die Rotationsarretierungseinrichtung Gleitschienen (35) umfasst auf denen ein Wagen (37) gleitet, der mit der Schraube durch eine Verbindung (39, 40) vereinigt ist, die in zwei zu der Schraube (1) transversalen Richtungen flexibel ist.

14. Getriebe nach einem der Ansprüche 1 bis 13, **dadurch gekennzeichnet, dass** es eine in den Hohlraum (2) eingesetzte Distanzhülse (5), auf der sich die Befestigungseinrichtung (3, 13) abstützt, umfasst und eine auf die Schraube (1) montierte ausgesparte Verschlusskappe (16), die an der Distanzhülse anschlägt und von dem langgestreckten Organ durchquert wird.

15. Getriebe nach einem der Ansprüche 1 bis 14, **dadurch gekennzeichnet, dass** das langgestreckte Organ in der Schraube (1) ein einteiliges bzw. ungeteiltes Stück (26) umfasst und außerhalb der Schraube ein geteiltes Stück (27), das mit dem ungeteilten Stück durch eine Traverse (29) verbunden ist.

## Claims

1. A transmission, consisting of a longilinear component (4, 11, 12), a motor (15, 24), and a screw (1) and nut (18) assembly, where the nut allows the screw to slide, with the nut being driven by the motor and the component being attached to the screw, in such a way as to control the movement of the component by means of the screw and by a movement conversion between a rotation of the nut and a translation of the screw, a combination of the component and an attachment means of the component to the screw being flexible in the angular position relative to the screw, **characterized in that** the screw is bored with an axial cavity (2) and that the component is attached to the screw by a means (3, 13) housed in the cavity.

2. A transmission according to claim 1, **characterized in that** the attachment means (3, 13) is at mid-travel position of the nut on the screw.

3. A transmission according to any one of claims 1 or 2, **characterized in that** the cavity and the component pass completely through the screw.

4. A transmission according to any one of claims 1 to 3, **characterized in that** the component is a flexible cable (4) and the attachment means (3) is a setting.

5. A transmission according to any one of claims 1 to 3, **characterized in that** the component is a rigid rod (12) and the attachment means includes a dual articulation.

6. A transmission according to any one of claims 1 to 5, **characterized in that** the component is rigid under torsion and the screw is free in rotation.

7. A transmission according to any one of claims 1 to 5, **characterized in that** the screw is provided with a rotation stop means (19, 20) relative to a frame (14, 22).

8. A transmission according to claim 7, **characterized in that** the rotation stop means includes a travelling runner pointing in the direction of the screw.

9. A transmission according to any one of claims 7 or 8, **characterized in that** the rotation stop means includes a two-degrees-of-freedom coupling for the transverse tilting movement of the screw between the screw and the frame.

10. A transmission according to claim 8, **characterized in that** the coupling includes wide and wide-open grooves (21) in which rollers (20) of the runner may move transverse to the screw in both directions, the runner (19) being connected to the screw.

11. A transmission according to claim 8, **characterized in that** the coupling includes wide grooves in which rollers (20) of the runner may move transverse to the screw in one direction, the runner being connected to the screw by a means (31, 33) providing flexibility in one opening direction of the grooves.

12. A transmission according to claim 11, **characterized in that** the means is a leaf spring (35).

13. A transmission according to claim 7, **characterized in that** the rotation stop means includes sliders (35) on which slides a runner (37) joined to the screw by a coupling (39, 40) flexible in two directions transverse to the screw (1).

14. A transmission according to any one of the claims 1 to 13, **characterized in that** it includes a spacer (9) engaged in the cavity (2), against which the attachment means (3, 13) stops and a hollowed-out cap (16), mounted on the screw (1) stopping on the spacer, and which the longilinear component passes through.

15. A transmission according to any one of the claims 1 to 14, **characterized in that** the longilinear component includes a unitary portion (26) in the screw (1) and a divided portion (27) outside the screw, which is coupled to the unitary portion by a spreader (29).
